# EUROPEAN PATENT SPECIFICATION

(11) **EP 3 186 195 B1**
(45) Date of publication and mention of the grant of the patent: **11.12.2019**
(21) Application number: 14772231.8
(22) Date of filing: 29.08.2014
(51) Int. Cl.: C02F 1/20, C02F 1/52, C02F 101/10, C02F 103/28

(54) **METHOD AND APPARATUS FOR DECALCIFYING EFFLUENT OF A WATER TREATMENT**
VERFAHREN UND VORRICHTUNG ZUR ENTKALKUNG VON ABFLUSS EINER WASSERBEHANDLUNG
PROCÉDÉ ET APPAREIL DE DÉCALCIFICATION D'EFFLUENT D'UN TRAITEMENT D'EAU

(43) Date of publication of application: 05.07.2017
(73) Proprietor: Industriewater Eerbeek B.V., 6961 LW Eerbeek (NL)
(72) Inventor: HULSHOF, Walter Antonius Maria, NL-6961 LW Eerbeek (NL)
(74) Representative: V.O.
(86) International application number: PCT/NL2014/050591
(87) International publication number: WO 2016/032321

(56) References cited:
- EP-A1- 0 097 388
- EP-A1- 1 734 011
- WO-A1-2014/010776
- DE-A1-102008 028 003
- DE-A1-102012 209 756
- PATRICK HUBER: "Kinetics of CO 2 Stripping and Its Effect on the Saturation State of CaCO 3 upon Aeration of a CaCO 3 -CO 2 -H 2 O System: Application to Scaling in the Papermaking Process", INDUSTRIAL & ENGINEERING CHEMISTRY RESEARCH., vol. 50, no. 24, 21 December 2011 (2011-12-21), pages 13655-13661, XP055244140, US ISSN: 0888-5885, DOI: 10.1021/ie200956z
- RAVIV SEGEV ET AL: "Modeling CaCO3 precipitation in fluidized bed CO2 stripping desalination process", DESALINATION., vol. 311, 1 February 2013 (2013-02-01), pages 192-197, XP055244138, NL ISSN: 0011-9164, DOI: 10.1016/j.desal.2012.11.024

## Description

### FIELD OF THE INVENTION

The invention relates to a method for decalcifying water, in particular effluent of a water purification process, namely, biologically purified wastewater for the purpose of replacing groundwater or surface water. Preferably, this method is used in the paper industry.

### BACKGROUND OF THE INVENTION

In the industry, particularly the paper industry, reuse of process water is increasingly important. After internal reuse has been optimised and thereby the fresh water use (spring or surface water) has been reduced to a (too) far-reaching extent, the demand for biologically purified process water becomes large. As the process water system of a paper mill is closed further, the calcium concentration increases by acidification (rot by bacteria) therein. In the biological purification, only a part of the calcium concentration is removed.

Reuse of partially purified water with or without partial softening is already being applied in various paper mills at less critical points. The quality (temperature and residual pollution) of this water, however, does not make it possible to replace the employment of fresh water (ground and/or surface water) to a far-reaching extent. In this regard, primarily, the presence of calcium is the biggest problem because - at the current critical points of large-scale fresh water use - deposits of calcium (originating from calcium carbonate and calcium sulphate) cannot be accepted. In addition to replacing fresh water, reuse of biologically cleaned water can provide a possibility of lowering organic dirt load in the process water system by dilution. While this does not result in a lowering of the fresh water use, it does reduce the dissolution of CaCO₃. Consequently, the concentration of calcium and the precipitation of calcium carbonate will present fewer problems both in the paper mill and in the purification process.

The large amount of low-grade heat contained in the water could be used for the heating of houses and offices. Application of heat exchangers is required then, but these calcify if the hardness of the water is too high.

Particular attention is to be paid to the salt load in the process water system of the paper mill. Along with the raw materials and auxiliaries that are used in the paper industry, various salts enter the process water system. In that connection, typically, the concentration of chloride is limited to avoid corrosion of the (stainless steel) machinery. Membrane removal of chloride is not possible if a high concentration of CaCO₃ is present in the water.

There are various ways of softening water and so also effluent of a water purification. The trick, however, is to do this in a way proving to be so low in both investment and operational costs that reuse of water is not only integrally sustainable but also economically sound. Also, it is important that the softening be carried through so far that the softened water can serve as a replacement for ground and/or surface water and so meets high quality standards.

Methods for decalcifying water are known, e.g., from EP 1 120 380, NL 7611903 and EP 0 335 043 A1. All these documents describe a method of decalcifying in which compressed air, via a diffuser or perforated plate / membrane, is contacted with water, whereby CO₂ which is dissolved in the water is emitted to the compressed air, as a result of which CaCO₃ (and/or MgCO₃ and/or CaSO₄) precipitates from the water, and is removed. Here, recirculation of CaCO₃ crystals may be applied, so that a crystallisation surface is presented and the crystallisation process proceeds more effectively. The drawback of the methods described in these documents is that, firstly, the operational costs are high due to calcification of aeration elements, tanks, and the like, and, secondly, insufficient crystallisation surface is presented.

The document DE 10 2012 209756 discloses another system for decalcifying water.

Also known is the Crystalactor®, an effectively working softening plant, i.e., a high degree of water quality can be achieved with it, which operates on the principle of crystallisation in a pellet reactor. But here too, there are various inherent disadvantages. Firstly, the investment is relatively high. Secondly, the crystallisation takes place on sand grains, so that the CaCO₃ that is discharged is not pure and therefore has a lower (sustainability) value and sand needs to be supplemented continually. A third disadvantage is the dosage of lye, being the driving force to raise the pH of the water and hence the crystallisation of the CaCO₃ on the sand grains. The price of this lye makes for relatively high operational costs. If sodium hydroxide is used as lye, the softened water will eventually contain more sodium ions, which means one salt ion is being replaced with another. Application of lime milk does not entail the drawback of introducing other ions into the water, but an expensive dosing installation is required and all calcium that is introduced with the lime milk also needs to be discharged again as calcium carbonate. For that matter, having regard to the sustainability principle, application of chemicals is questionable anyhow.

Accordingly, there is still a need for an improved system and method for an effective water purification, more specifically, water decalcification.

### SUMMARY

The present invention has for its object the provision of a method for removing CaCO₃ from water that is low in investment and operational costs, yields a water quality that can replace fresh water and is integrally sustainable.

This object is achieved in the present invention by utilising a method whereby CO₂ is driven from the water by stripping, whereby the stripping process is carried out in a series-arranged number of reactors having therein a high concentration of seed crystals without utilisation of compressed air or chemicals, has low maintenance and operational costs, and produces a pure CaCO₃ i.

The present invention now provides a method for removing CaCO₃ and/or other pollutants from water, comprising the following steps:
a) treating water in a reactor vessel by mechanical surface CO₂ stripping with an electrically driven rotor, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters;;
b) conducting the treated water to a next reactor vessel;
c) treating the treated water by mechanical surface CO₂ stripping with an electrically driven rotor in the next reactor vessel, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters; and
d) optionally repeating steps b) and c);
e) thereafter discharging CaCO₃ from the water.

Also, the invention comprises an apparatus in which the above-mentioned method can be carried out. This installation also comprises means for the discharge of the CaCO₃ removed from the water. In practice, the method can be expanded to include an acidification step, a filtration step and a disinfection step, and the installation to include means for these steps.

### DETAILED DESCRIPTION

The invention comprises a method whereby CO₂ is driven from the water by stripping, whereby the stripping process is carried out in a series-connected number of tanks. The CO₂ stripping takes place in that the water is mechanically put into turbulent motion, as a result of which a large amount of air is mixed into the water. An additional benefit involved here is that this makes it possible for a high concentration of seed crystals, which is present in the water, to remain in suspension. By recirculation of the seed crystals, they grow, so that they are simple to separate from the water and the separated CaCO₃ can be easily removed from the system in a condition of shovel consistency. Such a method and installation have the advantage of requiring little maintenance, little energy and no chemicals, and therefore being suitable for large volume flows.

The present invention accordingly provides a method for removing CaCO₃ from water, comprising the following steps
a. treating water in a reactor vessel by mechanical surface CO₂ stripping with an electrically driven rotor, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters;
b. conducting the treated water to a next reactor vessel;
c. treating the treated water by mechanical surface CO₂ stripping with an electrically driven rotor in said next reactor vessel, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters;and
d. optionally repeating steps b) and c);
e. optionally introducing and maintaining a high seed crystal concentration in the water to be treated
f. thereafter discharging CaCO₃ from the water

The step of treating the water with a mechanical surface CO₂ stripper (MOS) involves putting the water into turbulent motion by causing a motion of the water just below the surface and simultaneously drawing in (headspace) air present above it. Putting the water into motion causes an intensive mixing of the (headspace) air and the water to a point deeply below the water surface level in the reactor tank. Putting the water into motion is done by a rotor with blades, the shape of the blades being chosen such that a substantially rotating circumaxial circulation of the water is set going, so that the entire contents of the reactor uniformly come into contact with the air drawn into the liquid by the rotor.

The water to be treated preferably originates from an industrial process, for example paper making, and has passed a preferably biological water treatment plant before it can be conveyed to the softening plant of the present invention.

This supplying pipe system and the pipe system that is part of the installation as described herein should preferably be as short as possible and preferably be made of HDPE (high density polyethylene) or one or more other lime sediment repellent materials to prevent the occurring deposition of CaCO₃ (lime scaling) and, if occurring nonetheless, to be able to simply remove this lime scale or precipitate. If the water to be softened needs to be lifted to the reactor(s), preferably a pumping unit is used. With water to be softened having a calcium concentration of more than 200 mg/l, pumps of the centrifugal type will rapidly become less effective as a result of scaling. Regular but unwanted maintenance is necessary then. For the present application, however, a centrifugal pump can be used if seed crystals are added in the suction of the pump. These prevent scaling in the pump by their abrasive action and by presenting crystallisation surface. Pipes are preferably tightly dimensioned so that high flow velocities occur and settlement of CaCO₃ in and/or scaling on inner walls of pipes are prevented. For the main pipe, velocities of 1-1.5 m/s are recommended, for the seed crystal recirculation pipe 1.5-2.5 m/s. The reactor must be of robust construction to be able to take up the water and turbulence forces of the MOS but does not otherwise call for application of special materials. The reactors are preferably arranged in the ground for the most part to avoid costly aboveground constructions.

The shape of the reactor may be chosen freely, while the size of the reactor, in correlation with the residence time of the water and other parameters, is determinative of the capacity for an efficient water softening. From a structural point of view, it is advantageous if the reactors are virtually identical but this is not requisite, so that use can be made of available tanks. The transition from one reactor to another proceeds with the help of pipes as also discussed above with respect to the supply. What is important is a high degree of plug flow through the reactor(s).

Preferably but not necessarily, the installation proper consists of a series of two or more preferably virtually identical reactors, which are connected in series (i.e., the supply of a next reactor is coupled to the discharge of a preceding reactor). At the end of the series, the installation is completed with a CaCOs/water separator (settling system). The reactors preferably have a content such that the water resides in the reactor for 30-60 minutes. The depth depends on the MOS used, which may lead to inefficiency if a basin is too shallow and to insufficient mixing action if a basin is too deep. Depending on the water to be softened, the number of series-arranged reactors and the size thereof should be so chosen as to bring about sufficient softening. Determinative of a sufficient degree of softening are the crystallisation surface presented there and the stripping efficiency of the MOS. With an input calcium content of 300 mg/l, a set of three to five series-arranged reactors as further described herein has proven sufficient to decalcify the water to a far-reaching extent. In all reactors, precipitation of CaCO₃ will take place throughout the tank, because the MOS brings air deeply into the tank into intensive contact with the seed crystals suspended in the water. Everywhere in the tank, CO₂ will strip to the air and thus form the driving force for the precipitation. The seed crystals prevent scaling both on the reactor tank walls and on the MOS and so these remain maintenance-free.

Stripping arises as a result of a difference in CO₂ concentration in the air with respect to that in the water, these concentrations being virtually equal under stable conditions. The driving force to remove CO₂ is hence very small, and therefore has an effect only with a large air supply.

The concentration of seed crystals is kept at 5-100 g/l, preferably at 20 to 80 g/l and most preferably at 30-50 g/l in the reactors. Preferably the highest concentration that can still be kept in suspension by the MOS. This concentration can be simply determined experimentally by a person skilled in the art and depends on the geometry of the reactor, the MOS used, and the parameters with which this MOS operates (for example, speed). The MOS is an electrically driven rotor, consisting of a drive shaft and rotor blades or vanes thereon, which is mounted just below the surface level of the water in the reactor, such that all parts of the rotor are below the surface and - at rest - are covered with a thin film of water. The rotor blades of the MOS, due to their shape and rotational speed, ensure an intensive mixing of air and water to a point deeply below the water level in the reactor tank. As a result, CO₂ stripping occurs throughout the reactor. The shape of the rotor and the blades is chosen such that a liquid circulation rotating around the axis of the MOS occurs, so that the whole reactor contents uniformly come into contact with the air drawn into the liquid by the rotor. Openings in the rotor deck ensure that the reduced pressure arising behind a rotor blade is equalised, which lowers the driving energy. The rotor of the MOS is driven at a speed of 25-200 rpm, preferably 50-100 rpm, more preferably around 65-75 rpm. On the bottom of the reactor, a baffle or water deflector is mounted to avoid the water coming in a circular movement from the top to the bottom, as a result of which the effectiveness of the CO₂ stripping could decrease. The shape of the reactor may, in principle, be chosen freely, with the proviso that a residence time per reactor of more than half an hour, but preferably from 0.5 to 1 hour, is desired and the surface of the reactor is sufficiently large to bring in sufficient air volume (at a flow rate of 200 m³/h, therefore, a total content of 100 times the number of reactors (for example, five), that is, around 500 m³ is necessary then) and the shape of tank and MOS are such that the water in the tank can be stirred well and hence mixed well. The reactor surface must be large enough to allow the MOS to work efficiently. A smaller reactor calls for a smaller MOS. The depth of the reactor measured from the underside of the rotor should be 1 meter minimum and 4 meters maximum. A small depth leads to release of energy on the bottom of the reactor that is converted into an unwanted reaction force on the bearing construction of the MOS. Too great a depth can lead to insufficient turbulence in the whole of the reactor so that seed crystals are not, or insufficiently so, kept in suspension. An MOS has an air mix-in capacity of around 300-400 m³ of air/kW of installed power. The MOS is preferably mounted on a bridge which is set up over the reactor. The distance from the bridge to the top of the rotor is chosen such that splashing water with suspended CaCO₃ particles does not end up against the bridge. In practice, that distance will be about 1 meter. The MOS is so positioned relative to the water level in the reactor that the flat part of the rotor sits approximately at or up to 50 mm below the (stationary) liquid level in the reactor. The transition from one reactor to another proceeds with the help of pipes such as have also been discussed above with regard to the supply.
A passage from one tank to another, or from one compartment to another, should be large enough to allow the flow to pass, but not too large either, so as to prevent the compartmentation of the reactors being undone.

A CaCO₃/water separator is arranged after the last reactor.
This can be a normal settling tank with clearing installation or a parallel plate separator. If, rather than a radical softening, a partial softening is opted for, it is necessary, when choosing a CaCOs/water separator, to take the residual scaling properties of the (partially) softened water into account. When softening has been radical, this is less critical. With a slight dosage of CO₂ or other acid, scaling on the CaCO₃/water separator can be prevented without calcium redissolving.
The CaCO₃ is discharged at the bottom of the (settling) tank by a continuously operating pump. The pump must operate continuously to prevent clogging on the suction side of the pump. The discharge is for the most part recycled to the first reactor as recirculation of seed crystals. The hourly produced CaCO₃ particles are discharged as lime drain-off with an endless screw system, such that excess water can flow back to the settler and lime of shovel consistency is screw-conveyed to the CaCO₃ depot. The floor of the CaCO₃ depot is preferably constructed at an angle of about 3° and terminates in a gutter. Thus, after leak-out of water, the dry matter content of the CaCO₃ can increase further. A rooflet above the CaCO₃ depot prevents remoistening.

A method according to the invention further has the advantage over the known prior art that due to the reactors being arranged in series, a quasi plug flow arises whereby the incoming water with a relatively high bicarbonate content has only limited influence on the situation in the next reactor. Consequently, the pH can rise per reactor and come closer to the ultimate pH value of 8.4 at which in the Ca, CaCO₃, CO₂, HCO₃ equilibrium a complete CaCO₃ does not take part anymore because it has precipitated.

In practice, the process will proceed as follows. The supply pump can be directly switched on to full capacity, at simultaneous maximum speed of all MOS units. Directly, CaCO₃ will precipitate, which is preferably completely recirculated as seed crystals until the desired CaCO₃ concentration in the reactors has been achieved. During the increase of the seed crystal concentration, the CaCO₃ concentration in the effluent will decrease steadily. In-line pH measurement, measurement of the conductivity, and measuring the calcium concentrations after the last reactor or after the settler can provide for process monitoring, whereby the speed of the MOS can be regulated based on the desired final calcium concentration or on the amount of influent.

The high seed crystal concentration in the reactors also provides the advantage that from the residual concentration of phosphate in the purified wastewater (the water to be softened) calcium phosphate is formed, which adheres to the crystals and is therewith removed from the water. Phosphate as a nutrient for bacteria is not wanted in the process water of a paper mill. The large extent of air induction by the MOS provides that the residual concentration of nitrite compounds in the purified wastewater is converted into nitrate. Nitrate as an oxygen-donating substance can have a positive effect on the anoxic or anaerobic process water system of a paper mill.

The invention further relates to an apparatus for decalcifying water.

This object is achieved in the present invention by utilising an apparatus comprising two or more series-arranged reactors (3), with a baffle (5) arranged on the bottom for counteracting circulation of the water from the top to the bottom in cross section of the reactor, which are suitable for holding water, especially biologically purified wastewater, the reactors being each provided with a water supply system (1) and a water discharge system (6), the water discharge system (6) of a first reactor forming the water supply system (1) of the next reactor, an mechanical CO₂ surface stripper comprising an electrically driven rotor (4) capable of causing a turbulent motion, and, connected to the water discharge system (6) of the last reactor, a settling tank (7) having connected thereto a CaCO₃ discharge (8) and a discharge for purified water (9). The distance between the underside of MOS (4) and the reactor bottom is 1-4 meters. The flat rotor top is located 0-50 mm under the water surface given quiescent water.

Such an apparatus has the advantage of being eminently suitable for carrying out the method of the invention.

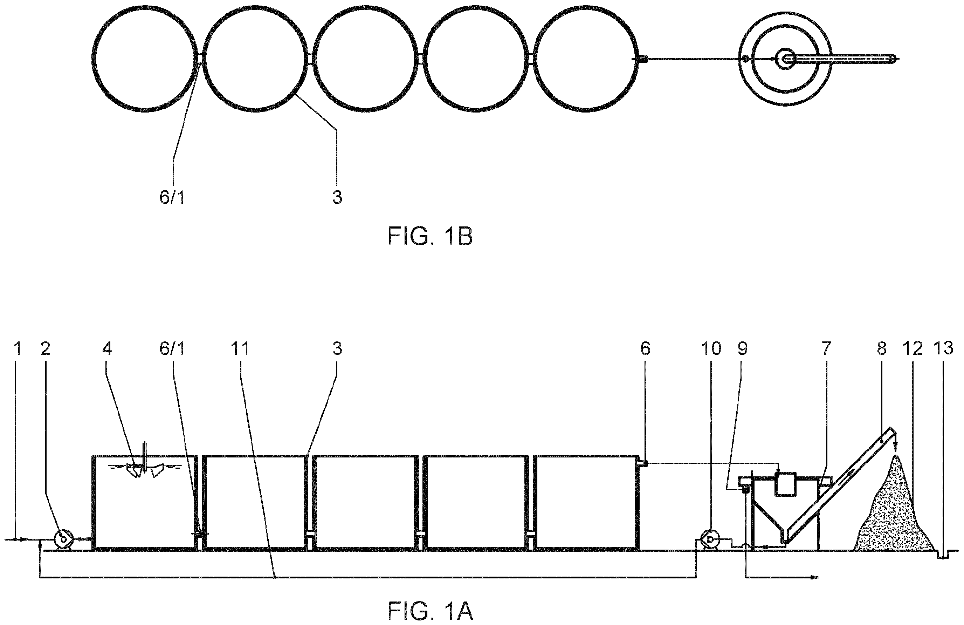

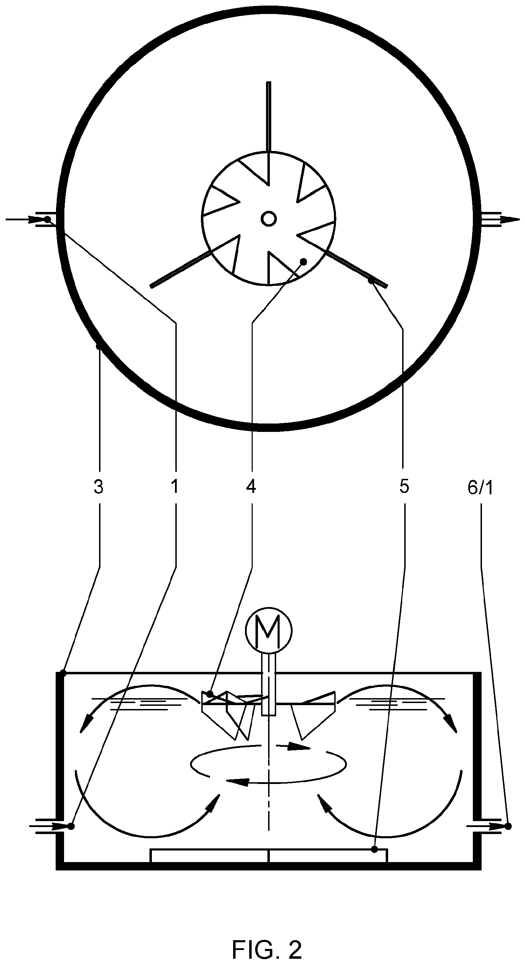

An apparatus according to the invention further has the advantage over the known prior art that it facilitates a decalcification process that is highly sustainable and that leads to a high degree of water softening. The apparatus according to the present invention may be described in a preferred embodiment as follows (see Figure 1). Central is a reactor (3) which is depicted in Figure 2 as a single reactor, but which is series-connected with one or more preferably similar reactors (see Fig. 1), whereby the outflow of a first reactor constitutes the inflow of a next successive reactor. As set out hereinabove, this series-connected array of reactors may be realised in one and the same housing, or the series consists of effectively discrete components connected by pipes. It will be clear that Fig. 1B is the top plan view of Fig. 1A.

The first reactor is fed with biologically purified wastewater via an influent pipe (1) which is passed into the reactor (3) via an endless screw or pump (2). The reactor (3) is provided with an MOS (4) whose capacity must suffice (> 10 m³ of air per m³ of water to be softened per reactor) to be able to realize the required stripping and mixing (as discussed in detail hereinabove). In a specific embodiment for the softening of about 200 m³/h of water having a calcium concentration of about 300 mg/l to a concentration of about 50 mg/l, an MOS is used having the following properties: motor power: 15 kW, air induction capacity: 5000 m³/h; speed rotor: 67.7 rev/min; diameter rotor: 1400 mm; number of blades rotor: 6. More specifically, this is a rotor of the type Landy (Landustrie, Sneek, Netherlands). The rotational speed of the MOS is controlled via a frequency converter which in turn is connected to and controlled by a quality analyser (e.g., calcium meter or conductivity meter). In the reactor (3), also a baffle (5) is present, whose shape is such as to substantially counteract circulation of the water from the top to the bottom in cross section of the reactor. In a preferred embodiment, the baffle comprises three or four baffle plates which are at right angles to the bottom surface of the reactor and are attached to each other in the centre of the reactor.

At the end of the last series-connected reactor, the water that is full of CaCO₃ particles is discharged via a pipe (6) to the settling tank (7). At the top of this settling tank is an overflow (9) where the purified water can be discharged. At the lower end of the settling tank, the amount of CaCO₃ to be drained is discharged via a CaCO₃ discharge screw (8) to a CaCO₃ depot (12) with a drainage gutter (13). The most part of the settled CaCO₃ is recycled via a pump (10) and a pipe (11) to the reactor (3) to serve as seed crystal.

## Claims

1. A method for removing CaCO₃ from water, comprising the steps of:
a) treating water in a reactor vessel by mechanical surface CO₂ stripping with an electrically driven rotor, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters;
b) conducting the treated water to a next reactor vessel;
c) treating the treated water by mechanical surface CO₂ stripping with an electrically driven rotor in said next reactor vessel, thereby causing a turbulent motion, wherein the top of the rotor is positioned at or up to 50 mm below the stationary liquid level and wherein the reactor vessel comprises a baffle arranged on the bottom for counteracting circulation of the water from the top to the bottom in cross section of the reactor and wherein the distance between the underside of the electrically driven rotor and the reactor bottom is 1-4 meters; and
d) optionally repeating steps b) and c)
e) thereafter discharging CaCO₃ from the water.

2. The method according to claim 1, wherein the water is biologically purified wastewater.

3. The method according to claim 1 or 2, wherein the power of the mechanical CO₂ surface stripper is chosen such that precipitated calcium carbonate remains in circulation.

4. The method according to any one of claims 1-3, wherein the concentration of seed crystals in the reactor(s) is kept at 5-100 g/l, preferably at 20 to 80 g/l and most preferably at 30-50 g/l.

5. The method according to any one of the preceding claims, wherein the effectiveness of the precipitation reaction is accelerated by simultaneous stripping and presentation of much crystallisation surface.

6. The method according to any one of the preceding claims, wherein the discharge of the series-arranged reactors terminates in a settling tank, in which the calcium carbonate settles and softened water is discharged.

7. The method according to claim 6, wherein the calcium carbonate is discharged from the settling tank, optionally via a CaCO₃ discharge unit, whereby the most part of the discharged CaCO₃ is recycled to one or more of the reactors as seed crystal circulation.

8. The method according to any one of the preceding claims, wherein the flat part of the rotor of the mechanical CO₂ surface stripper at rest is positioned at the height of or just below the liquid level in the reactor.

9. The method according to any one of claims 1-8, wherein furthermore calcium phosphate precipitates and is removed from the water.

10. The method according to any one of claims 1-9, wherein furthermore nitrite compounds present in the wastewater are converted into nitrate compounds.

11. An apparatus for decalcifying water, comprising two or more series-connected reactors (3) with a baffle (5) arranged on the bottom for counteracting circulation of the water from the top to the bottom in cross section of the reactor, which are suitable for holding water, in particular biologically purified wastewater, wherein these reactors are each provided with a water supply system (1) and a water discharge system (6), the water discharge system (6) of a first reactor being the water supply system (1) of the next reactor, an mechanical CO₂ surface stripper comprising an electrically driven rotor (4) and, connected to the water discharge system of the last reactor, a settling tank (7) having connected thereto a discharge of purified water (9) and a CaCO₃ discharge (8) said settling tank connected to the first reactor via a CaCO₃ recycle pipe (11), the recycle pipe (11) comprising a pump (10), wherein the distance between the underside of mechanical CO₂ surface stripper (4) and the reactor bottom is 1-4 meters and the flat rotor top is located 0-50 mm under the water surface given quiescent water and wherein the rotor is capable of causing a turbulent motion.

12. The apparatus according to claim 11, wherein there is provided a seed crystal circulation between the settling tank (7) and one or more of the reactors (3).

13. The apparatus according to any one of claims 11 or 12, wherein the mechanical CO₂ surface stripper (4) is provided with a frequency converter which is connected to a measuring device which measures one or more quality parameters of the process.

## Patentansprüche

1. Verfahren zum Entfernen von CaCO₃ aus Wasser, umfassend die folgenden Schritte:
a) Behandeln von Wasser in einem Reaktorgefäß mit mechanischem CO₂-Oberflächen-Strippen mit einem elektrisch angetriebenen Rotor, wodurch eine turbulente Bewegung verursacht wird, wobei die Oberseite des Rotors auf oder bis zu 50 mm unter dem stationären Flüssigkeitsspiegel positioniert ist und wobei das Reaktorgefäß eine am Boden angeordnete Prallplatte aufweist, die der Zirkulation des Wassers von oben nach unten im Querschnitt des Reaktors entgegenwirkt und wobei der Abstand zwischen der Unterseite des elektrisch angetriebenen Rotors und dem Reaktorboden 1 bis 4 Meter beträgt;
b) Leiten des behandelten Wassers zu einem nächsten Reaktorgefäß;
c) Behandeln des behandelten Wassers mit mechanischem CO₂-Oberflächen-Strippen mit einem elektrisch angetriebenen Rotor in dem nächsten Reaktorgefäß, wodurch eine turbulente Bewegung verursacht wird, wobei die Oberseite des Rotors auf oder bis zu 50 mm unter dem stationären Flüssigkeitsspiegel positioniert ist und wobei das Reaktorgefäß eine am Boden angeordnete Prallplatte aufweist, die der Zirkulation des Wassers von oben nach unten im Querschnitt des Reaktors entgegenwirkt, und wobei der Abstand zwischen der Unterseite des elektrisch angetriebenen Rotors und dem Reaktorboden 1 bis 4 Meter beträgt; und
d) gegebenenfalls Wiederholen der Schritte b) und c)
e) danach Entladen von CaCO₃ aus dem Wasser.

2. Verfahren nach Anspruch 1, wobei das Wasser biologisch gereinigtes Abwasser ist.

3. Verfahren nach Anspruch 1 oder 2, wobei die Leistung des mechanischen CO₂-Oberflächen-Strippers so gewählt wird, dass das ausgefällte Calciumcarbonat in Zirkulation bleibt.

4. Verfahren nach einem der Ansprüche 1 bis 3, wobei die Konzentration der Impfkristalle in dem Reaktor (den Reaktoren) bei 5 bis 100 g/l, vorzugsweise bei 20 bis 80 g/l und am meisten bevorzugt bei 30 bis 50 g/l gehalten wird.

5. Verfahren nach einem der vorhergehenden Ansprüche, wobei die Wirksamkeit der Ausfällungsreaktion durch gleichzeitiges Strippen und Exponieren von viel Kristallisationsoberfläche beschleunigt wird.

6. Verfahren nach einem der vorhergehenden Ansprüche, wobei das Entladen der in Reihe angeordneten Reaktoren in einem Absetztank endet, in dem sich das Calciumcarbonat absetzt und enthärtetes Wasser entladen wird.

7. Verfahren nach Anspruch 6, wobei das Calciumcarbonat gegebenenfalls über eine CaCO₃ Entladeeinheit aus dem Absetztank entladen wird, wobei der größte Teil des entladenen CaCO₃ als Impfkristallzirkulation in einen oder mehrere der Reaktoren zurückgeführt wird.

8. Verfahren nach einem der vorhergehenden Ansprüche, wobei sich der flache Teil des Rotors des mechanischen CO₂-Oberflächen-Strippers im Ruhezustand auf Höhe oder knapp unterhalb des Flüssigkeitsspiegels im Reaktor befindet.

9. Verfahren nach einem der Ansprüche 1 bis 8, wobei ferner Calciumphosphat ausfällt und aus dem Wasser entfernt wird.

10. Verfahren nach einem der Ansprüche 1 bis 9, wobei ferner im Abwasser vorhandene Nitritverbindungen in Nitratverbindungen umgewandelt werden.

11. Vorrichtung zum Entkalken von Wasser, umfassend zwei oder mehrere in Reihe geschaltete Reaktoren (3) mit einer am Boden angeordneten Prallplatte (5), um einer Zirkulation des Wassers von oben nach unten im Querschnitt des Reaktors entgegenzuwirken, die zum Halten von Wasser geeignet sind, insbesondere biologisch gereinigtem Abwasser, wobei diese Reaktoren jeweils mit einem Wasserversorgungssystem (1) und einem Wasserentladesystem (6) versehen sind, wobei das Wasserentladesystem (6) eines ersten Reaktors das Wasserversorgungssystem (1) des nächsten Reaktors ist, einen mechanischen CO₂-Oberflächen-Stripper mit einem elektrisch angetriebenen Rotor (4) und angeschlossen an das Wasserentladesystem des letzten Reaktors, einen Absetztank (7) mit einer daran angeschlossenen Entladung von gereinigtem Wasser (9) und einer CaCO₃-Entladung (8), wobei der Absetztank, über ein CaCO₃-Rückführrohr (11) mit dem ersten Reaktor verbunden ist, wobei das Rückführrohr (11) eine Pumpe (10) aufweist, wobei der Abstand zwischen der Unterseite des mechanischem CO₂-Oberflächen-Strippers (4) und der Reaktorboden 1 bis 4 Meter beträgt, und sich die flache Oberseite des Rotors 0 bis 50 mm unter der Wasseroberfläche bei ruhendem Wasser befindet, und wobei der Rotor eine turbulente Bewegung verursachen kann.

12. Vorrichtung nach Anspruch 11, wobei eine Impfkristallzirkulation zwischen dem Absetztank (7) und einem oder mehreren der Reaktoren (3) vorgesehen ist.

13. Vorrichtung nach einem der Ansprüche 11 oder 12, wobei der mechanische CO₂ -Oberflächen-Stripper (4) mit einem Frequenzumrichter versehen ist, der mit einem Messgerät verbunden ist, das einen oder mehrere Qualitätsparameter des Prozesses misst.

## Revendications

1. Procédé pour enlever du CaCo3 de l'eau, comprenant les étapes de :
a) traitement de l'eau dans un récipient réacteur par décapage mécanique du CO2 en surface avec un rotor entraîné électriquement, provoquant ainsi un mouvement turbulent, dans lequel le haut du rotor est positionné à ou jusqu'à 50 mm au-dessous du niveau de liquide immobile et dans lequel le récipient réacteur comprend un flasque agencé sur le fond pour une circulation contraire de l'eau depuis le haut vers le bas en section transversale du réacteur et dans lequel la distance entre le dessous du rotor entraîné électriquement et le fond du réacteur est de 1-4 mètres ;
b) conduction de l'eau traitée vers un prochain récipient réacteur ;
c) traitement de l'eau traitée par décapage mécanique du CO2 en surface avec un rotor entraîné électriquement dans ledit prochain récipient réacteur, provoquant ainsi un mouvement turbulent, dans lequel le haut du rotor est positionné à ou jusqu'à 50 mm au-dessous du niveau de liquide immobile et dans lequel le récipient réacteur comprend un flasque agencé sur le fond pour une circulation contraire de l'eau depuis le haut vers le bas en section transversale du réacteur et dans lequel la distance entre le dessous du rotor entraîné électriquement et le fond du réacteur est de 1-4 mètres ; et
d) optionnellement répéter les étapes b) et c)
e) ensuite évacuer le CaCO₃ de l'eau.

2. Procédé selon la revendication 1, dans lequel l'eau est de l'eau usée biologiquement purifiée.

3. Procédé selon la revendication 1 ou 2, dans lequel la puissance du décapeur mécanique de CO2 en surface est choisie de telle manière que du carbonate de calcium précipité reste en circulation.

4. Procédé selon l'une quelconque des revendications 1-3, dans lequel la concentration de germes cristallins dans le(s) réacteur(s) est maintenue à 5-100 g/l, de préférence à de 20 à 80 g/l et plus préférablement à 30-50 g/l.

5. Procédé selon l'une quelconque des revendications précédentes, dans lequel l'efficacité de la réaction de précipitation est accélérée par un décapage simultané et par présentation de plus de surface de cristallisation.

6. Procédé selon l'une quelconque des revendications précédentes, dans lequel l'évacuation des réacteurs agencés en série se termine dans un bassin de décantation, dans lequel le carbonate de calcium se dépose et l'eau adoucie est évacuée.

7. Procédé selon la revendication 6, dans lequel le carbonate de calcium est évacué depuis le bassin de décantation, en option via une unité d'évacuation de CaCO₃, moyennant quoi la plus grande partie du CaCO₃ est recyclée vers un ou plus des réacteurs comme circulation de germes cristallins.

8. Procédé selon l'une quelconque des revendications précédentes, dans lequel la partie plate du rotor du décapeur mécanique de CO2 en surface au repos est positionnée à la hauteur ou juste au-dessous du niveau du liquide dans le réacteur.

9. Procédé selon l'une quelconque des revendications 1-8, dans lequel en outre du phosphate de calcium précipite et est enlevé de l'eau.

10. Procédé selon l'une quelconque des revendications 1-9, dans lequel en outre des composés de nitrites présents dans l'eau usée sont convertis en composés de nitrates.

11. Dispositif pour décalcifier de l'eau, comprenant deux ou plus réacteurs (3) connectés en série avec un flasque (5) agencé sur le fond pour une circulation contraire de l'eau depuis le haut vers le bas en section transversale du réacteur, qui conviennent pour conserver de l'eau, en particulier de l'eau usée biologiquement purifiée, dans lequel ces réacteurs sont chacun pourvus d'un système d'alimentation d'eau (1) et d'un système d'évacuation d'eau (6), le système d'évacuation d'eau (6) d'un premier réacteur étant le système d'alimentation d'eau (1) du prochain réacteur, un décapeur mécanique de CO2 en surface comprenant un rotor entraîné électriquement (4) et, connecté au système d'évacuation d'eau du dernier réacteur, un bassin de décantation (7) ayant connecté à lui une évacuation d'eau purifiée (9) et une évacuation de CaCO₃ (8) ledit bassin de décantation connecté au premier réacteur via un tuyau de recyclage de CaCO₃ (11) le tuyau de recyclage (11) comprenant une pompe (10), dans lequel la distance entre le dessous du décapeur mécanique de CO2 en surface (4) et le fond du réacteur est de 1-4 mètres et le haut de rotor plat est situé 0-50 mm au-dessous de la surface de l'eau quand l'eau est calme et dans lequel le rotor est capable de provoquer un mouvement turbulent.

12. Dispositif selon la revendication 11, dans lequel il est fourni une circulation de germes cristallins entre le bassin de décantation (7) et un ou plusieurs des réacteurs (3).

13. Dispositif selon l'une quelconque des revendications 11 ou 12, dans lequel le décapeur mécanique de CO2 en surface (4) est pourvu d'un convertisseur de fréquence qui est connecté à un dispositif de mesure qui mesure un ou plusieurs paramètres de qualité du processus.
